(19)

**Europäisches Patentamt**
**European Patent Office**
**Office européen des brevets**

(11) **EP 4 779 835 A1**

(12) **EUROPEAN PATENT APPLICATION**
published in accordance with Art. 153(4) EPC

(43) Date of publication:
**22.07.2026 Bulletin 2026/30**

(21) Application number: **24864720.8**

(22) Date of filing: **13.09.2024**

(51) International Patent Classification (IPC):
*H02J 3/38* (2026.01)       *H02J 3/44* (2026.01)
*H02J 3/28* (2026.01)

(86) International application number:
**PCT/CN2024/118651**

(87) International publication number:
**WO 2025/056006 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023   CN 202311181407**

(71) Applicant: **EcoFlow Inc.**
**Shenzhen, Guangdong 518000 (CN)**

(72) Inventors:
• **HU, Xiong**
  **Shenzhen, Guangdong 518000 (CN)**
• **ZHAO, Mi**
  **Shenzhen, Guangdong 518000 (CN)**
• **CHEN, Xi**
  **Shenzhen, Guangdong 518000 (CN)**
• **WANG, Lei**
  **Shenzhen, Guangdong 518000 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **OFF-GRID MODE-TO-GRID-CONNECTED MODE SWITCHING CONTROL METHOD FOR POWER DEVICE AND POWER DEVICE**

(57)    A method for controlling switching of a power device from off-grid operation to grid-connected operation is provided. When a power grid is powered on, a given angular frequency difference required by a voltage-controlled oscillator when a phase of an off-grid output voltage is corrected to a phase of a power grid voltage is directly calculated based on an output phase of the power device in an off-grid mode and a preset angular frequency, and an integral result of a PI controller of a phase-locked loop (PLL) is initially assigned based on the given angular frequency difference. Then the PLL is controlled to start operating, an oscillation angular frequency of the voltage-controlled oscillator is configured based on an output of the PI controller and a preset power grid frequency, and the power device is controlled to connect to the power grid.

Obtain, when a power grid is powered on, a real-time angular frequency value of the power grid and a real-time power grid voltage — S110

Set, in an off-grid operating mode, an oscillation angular frequency of a voltage-controlled oscillator of a PLL to the real-time angular frequency value of the power grid, and control, based on the oscillation angular frequency, the voltage-controlled oscillator to operate, to obtain an output phase of a power device — S120

Adjust the oscillation angular frequency when a deviation exists between the output phase and the real-time phase of the real-time power grid voltage, so that the output phase tracks the real-time phase — S130

Obtain a given angular frequency value of the oscillation angular frequency when the output phase tracks the real-time phase — S140

Perform calculation based on the real-time angular frequency value of the power grid and the given angular frequency value to obtain a given angular frequency difference, and initially assign an integral result of a PI controller of the PLL based on the given angular frequency difference — S150

Control the PI controller to start operating, and configure the oscillation angular frequency of the voltage-controlled oscillator based on an output angular frequency value of the PI controller and a preset angular frequency value of the power grid — S160

Control the power device to connect to the power grid — S170

**FIG. 3**

EP 4 779 835 A1

**Description**

**CROSS-REFERENCE TO RELATED APPLICATIONS**

This application claims priority to Chinese Patent Application No. 202311181407.4, filed with the China National Intellectual Property Administration on September 13, 2023 and entitled "METHOD FOR CONTROLLING SWITCHING OF POWER DEVICE FROM OFF-GRID OPERATION TO GRID-CONNECTED OPERATION AND POWER DEVICE", which is incorporated herein by reference in its entirety.

**TECHNICAL FIELD**

This application relates to the field of power electronics technologies, and in particular, to a method for controlling switching of a power device from off-grid operation to grid-connected operation, a power device, and a computer-readable storage medium.

**BACKGROUND**

Statements herein merely provide background information related to this application, and do not necessarily constitute exemplary technologies.

The increasing mounting of distributed renewable energy and energy storage apparatuses has brought structural changes to modern power distribution systems. A micro-grid based on an energy storage system can continue to supply power to regional loads without disconnecting from the transmission system when the power grid fails, maintaining off-grid operation. When the power grid returns to normal, the micro-grid system exits the off-grid operation mode and switches to a grid-connected operation mode. The energy storage apparatus such as a power conversion system (PCS) can be used for off-grid operation with load or grid-connected rectification and inversion, that is, charging and discharging operation. After the off-grid operation with load is performed and the power grid returns to normal, a control strategy for switching from off-grid operation to grid-connected operation may be initiated. After the grid-connected operation is performed, the energy storage apparatus may control an operating status of battery charging and discharging. However, in the related art, a process of switching from off-grid operation to grid-connected operation is relatively cumbersome, consuming significant computing resources and being prone to errors.

**SUMMARY**

According to various embodiments of this application, a method for controlling switching of a power device from off-grid operation to grid-connected operation, a power device, and a computer-readable storage medium are provided.

According to a first aspect, an embodiment of this application provides a control method for grid-connected operation of a power device, the power device including a phase-locked loop (PLL), and the control method including:

obtaining, when a power grid is powered on, a real-time angular frequency value of the power grid and a real-time power grid voltage;

setting, in an off-grid operation mode, an oscillation angular frequency of a voltage-controlled oscillator of the PLL to the real-time angular frequency value of the power grid, and controlling, based on the oscillation angular frequency, the voltage-controlled oscillator to operate, to obtain an output phase of the power device;

adjusting the oscillation angular frequency when a deviation exists between the output phase and the real-time phase of the real-time power grid voltage, so that the output phase tracks the real-time phase;

obtaining a given angular frequency value of the oscillation angular frequency when the output phase tracks the real-time phase;

performing calculation based on the real-time angular frequency value of the power grid and the given angular frequency value to obtain a given angular frequency difference, and initially assigning an integral result of a PI controller of the PLL based on the given angular frequency difference;

controlling the PI controller to start operating, and configuring the oscillation angular frequency of the voltage-controlled oscillator based on an output angular frequency value of the PI controller and a preset angular frequency value of the power grid; and

controlling the power device to connect to the power grid.

According to a second aspect, an embodiment of this application further provides a power device, including a PLL, a memory, a processor, and a computer program stored in the memory and executable on the processor. The PLL is connected to the processor, and the processor implements the steps of the foregoing method for controlling switching of a power device from off-grid operation to grid-connected operation when executing the computer program.

According to a third aspect, an embodiment of this application further provides a computer-readable storage medium. The computer-readable storage medium stores a computer program, and the computer program, when executed by a controller, may implement the steps of the foregoing method for controlling switching of a power device from off-grid operation to grid-connected operation.

Details of one or more embodiments of this application are provided in the accompanying drawings and descriptions below. Other features, objectives, and advantages of this application become apparent from the specification, the accompanying drawings, and the claims.

**BRIEF DESCRIPTION OF THE DRAWINGS**

To describe the technical solutions of the embodiments of this application or the exemplary art more clearly, the following briefly describes the accompanying drawings required for describing the embodiments or the exemplary art. Apparently, the accompanying drawings in the following description merely show some embodiments of this application, and a person of ordinary skill in the art may still derive the accompanying drawings of other embodiments from these accompanying drawings without creative efforts.

FIG. 1 is a schematic diagram of a module of a phase-locked loop (PLL) according to an embodiment of this application.

FIG. 2 is a schematic diagram of a power grid voltage according to an embodiment of this application after Clark and Park transformation.

FIG. 3 is a flowchart of a method for controlling switching of a power device from off-grid operation to grid-connected operation according to an embodiment of this application.

FIG. 4 is a flowchart of a method for controlling switching of a power device from off-grid operation to grid-connected operation according to an embodiment of this application.

FIG. 5 is a flowchart of a method for controlling switching of a power device from off-grid operation to grid-connected operation according to an embodiment of this application.

FIG. 6 is a flowchart of a method for controlling switching of a power device from off-grid operation to grid-connected operation according to an embodiment of this application.

FIG. 7 is a phase tracking waveform diagram of a method for controlling switching of a power device from off-grid operation to grid-connected operation in the related art according to an embodiment of this application.

FIG. 8 is a schematic diagram of a module of an apparatus for controlling switching of a power device from off-grid operation to grid-connected operation according to an embodiment of this application.

FIG. 9 is a schematic structural diagram of a power device according to an embodiment of this application.

**DETAILED DESCRIPTION**

To make technical problems to be solved in this application, technical solutions, and beneficial effects more comprehensible, this application is described below in further detail with reference to drawings and embodiments. It should be understood that specific embodiments described herein are merely used for explaining this application but are not intended to limit this application.

In a power system and a power electronics application, a phase-locked loop (PLL) is mainly used to lock a phase angle of a power grid voltage, to complete tracking of the phase angle of the power grid voltage. A dq-based three-phase synchronous reference frame PLL (SRF-PLL) may also be referred to as a single synchronous reference frame PLL (SSRF-PLL). The PLL does not need additional hardware, and is completely implemented by a software algorithm. In the case of an ideal three-phase voltage source, rapidly and accurately synchronizing a power grid voltage is an effective power grid synchronization technology with a relatively high application rate.

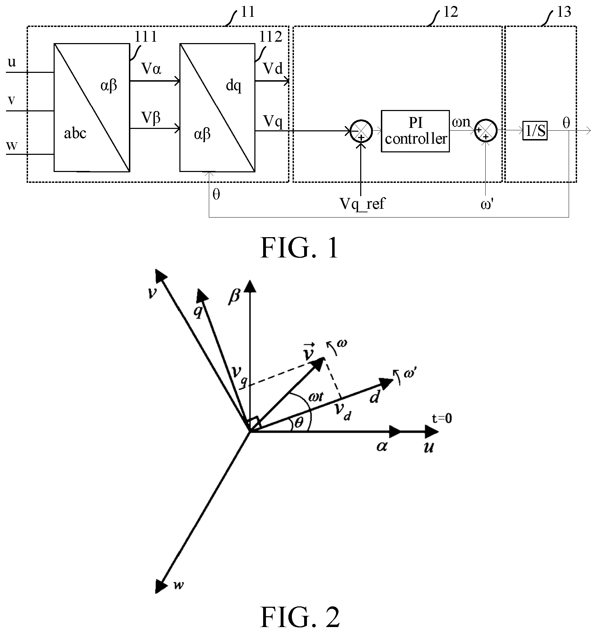

A structural block diagram of the SRF-PLL is shown in FIG. 1, and corresponds to three modules defined by the PLL. A Clark transformer 111 and a Park transformer 112 play a phase detection function, that is, equivalent to a phase detector (PD) 11 of a PLL, to obtain a q-axis component Vq of three phase voltages to obtain phase information. The PI controller serves as a loop filter (LF) 12 of the PLL, and an output $\omega n$ of the PI controller and a given angular frequency $\omega'$ are added to obtain an angular frequency of a voltage. An integrator (1/S) serves as a voltage-controlled oscillator (VCO) 13 in a PLL. The angular frequency is outputted as a phase-locked voltage phase through the integrator (1/S), and also fed back as an angle $\theta$ for rotating coordinate transformation.

A basic principle of the SRF-PLL is based on the dq synchronous rotating reference frame. First, three phase voltages u, v, and w are converted to a stationary reference frame through the Clark converter 111 and then converted to a rotating reference frame through the Park converter 112. Referring to FIG. 2 simultaneously, a schematic diagram of three phase voltages through Clark transformation and Park transformation is shown. A voltage vector $\vec{v}$ is a spatial synthesized voltage vector of three phase voltages u, v, and w. Vq is a q-axis component of the voltage vector $\vec{v}$ in a rotating reference frame, and Vd is a d-axis component of the voltage vector $\vec{v}$ in the rotating reference frame.

A component Vq of a voltage vector $\vec{v}$ on a q-axis includes phase information and frequency information of the power grid voltage, and Vq reflects a phase relationship between the power grid voltage and a d-axis. When Vq > 0, the voltage vector $\vec{v}$ leads the d-axis. To achieve synchronous phase locking, a frequency needs to be increased (that is, a rotation speed of the rotating reference frame). When Vq < 0, the voltage vector $\vec{v}$ lags behind the d-axis. To achieve synchronous phase locking, the frequency needs to be decreased (that is, the rotation speed of the rotating reference frame is reduced). When Vq = 0, the voltage vector $\vec{v}$ is in phase with the d-axis. Therefore, the phase locking can be implemented by using Vq = 0 as a control target, even if $\theta = \omega t$.

In the related art, generally, when a power electronic device operates off-grid with a load and needs to switch to a grid-connected mode, two PLLs are required to operate. One is used to maintain a stable output of the power electronic device through self-oscillation during off-grid operation, while the other locks a power grid phase during grid-connected operation. This causes the switching from off-grid operation to grid-connected operation to be cumbersome, and mutual value assignment is required (which is prone to errors), which also wastes algorithm resources of a chip.

On the other hand, if only one PLL is used to operate, a relatively long switching time may be needed, and smooth switching from off-grid operation to grid-connected operation cannot be implemented. Specifically, during off-grid operation, since the PLL needs to provide a self-oscillation phase, an output of the PI controller is usually assigned a value of 0, and a given angular frequency $\omega'$ is assigned an alternating current angular frequency, for example, 50 Hz*2$\pi$. A voltage-controlled oscillator 13 is kept self-oscillating at a frequency of 50 Hz and a phase is triggered, so that the output voltage of the power device is kept at the phase. During the grid-connected operation, the transformed component Vq of the q-axis is equal to zero, indicating that the PLL has locked the power grid phase. The PI controller outputs $\omega n$, $\omega n + \omega'$ to jointly obtain an angular velocity of the power grid, and the power grid phase is obtained through integration of the voltage-controlled oscillator 13, so that the phase is locked successfully. However, when the PLL has been occupied ($\omega n$ is always assigned zero) during the off-grid operation, the power grid voltage cannot be tracked in real-time for phase locking in the off-grid mode. During the off-grid-to-grid-connected switch, if the PLL is directly used for phase locking, a locking time is relatively long, and a time requirement for the off-grid-to-grid-connected switch cannot be satisfied.

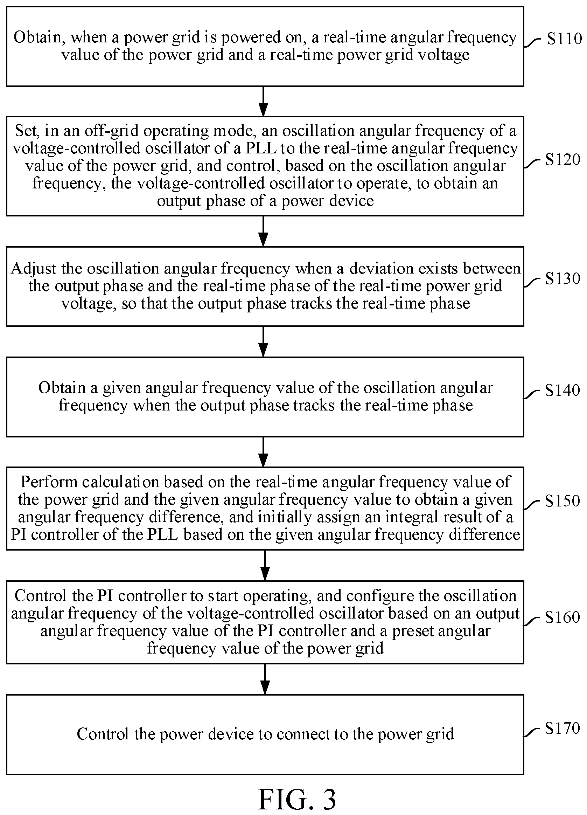

In view of the foregoing problem, an embodiment of this application provides a control method for grid-connected operation of a power device based on a PLL, that is, the power device includes a PLL. Referring to FIG. 3 and with reference to FIG. 1 to FIG. 2, the control method for grid-connected operation of a power device includes the following steps.

Step S110: Obtain, when a power grid is powered on, a real-time angular frequency value of the power grid and a real-time power grid voltage.

The real-time power grid voltage may be obtained by detecting the real-time power grid voltage through a corresponding detection circuit. In addition, a real-time frequency f_grid of the power grid may be calculated based on the obtained power grid voltage and through a zero-crossing frequency, and a real-time angular frequency value $2\pi f\_grid$ of the power grid may be calculated based on the real-time frequency f_grid of the power grid. The detection circuit may be formed by one or more of a voltage division circuit, a transformer, a filter circuit, an analog-to-digital conversion circuit, an amplification circuit, and the like.

Step S120: Set, in an off-grid operation mode, an oscillation angular frequency of a voltage-controlled oscillator of the PLL to the real-time angular frequency value of the power grid, and control, based on the oscillation angular frequency, the voltage-controlled oscillator to operate, to obtain an output phase of the power device.

The oscillation angular frequency $\omega n + \omega'$ of the voltage-controlled oscillator 13 of the PLL is set to the real-time angular frequency value $2\pi f\_grid$ of the power grid. In other words, an output $\omega n$ of the PI controller is assigned a value of 0, and a given angular frequency value $\omega'$ is assigned a real-time angular frequency value of the power grid, that is, an initial value of the given angular frequency value $\omega'$ is $\omega 0 = 2\pi f\_grid$. The power device operates based on the oscillation angular frequency $\omega n + \omega'$ to output an alternating current, and then an output (voltage) phase of the alternating current can be obtained, that is, a self-oscillation phase $\theta$ of the voltage-controlled oscillator 13.

Step S130: Adjust the oscillation angular frequency when a deviation exists between the output phase and the real-time phase of the real-time power grid voltage, so that the output phase tracks the real-time phase.

As described above, it may be determined through a component Vq of the voltage vector $\vec{v}$ on a q-axis whether a deviation exists between the output phase $\theta$ and the real-time phase. When Vq is not zero (or an absolute value is greater than a preset voltage value), it indicates that a deviation exists between the output phase and the real-time phase in this case. For example, the output phase is leading or lagging. It may be understood that the implementation of this step is performed by directly adjusting the oscillation angular frequency $\omega n + \omega'$ before the power connection of the power device, so that the output phase $\theta$ of the power device changes, to track the real-time phase. The aim is to enable the output phase $\theta$ to be consistent with the real-time phase, or keep the deviation between the two within an allowable range for further fine-tuning, thereby saving tracking time. For example, the oscillation angular frequency $\omega n + \omega'$ of the voltage-controlled oscillator 13 is adjusted based on a fixed or preset angular frequency with a certain rate of change that is set based on the real-time frequency f_grid of the power grid, thereby changing the output phase $\theta$ to track the real-time phase. A magnitude of the preset angular frequency depends on a magnitude of the foregoing deviation. For example, a larger deviation indicates a greater preset angular frequency or a larger rate of change thereof.

Step S140: Obtain a given angular frequency value of the oscillation angular frequency when the output phase tracks the real-time phase.

When the output phase $\theta$ is consistent with the real-time phase, or the deviation between the two is within the allowable range, it may be considered that the output phase $\theta$ tracks the real-time phase. Since the output $\omega n$ of the PI controller is assigned a value of 0, in this case, the given angular frequency value $\omega'$ is the oscillation angular frequency $\omega n + \omega'$. It is assumed that the oscillation angular frequency value is $\omega 1$ in this case, and when the output phase $\theta$ tracks the real-time phase, the given angular frequency value $\omega' = \omega 1$.

It may be understood that to ensure that the output phase $\theta$ remains consistent with the real-time phase or the deviation remains within the allowable range subsequently, the oscillation angular frequency $\omega n + \omega'$ should be kept near the $\omega 1$.

Step S150: Perform calculation based on the real-time angular frequency value of the power grid and the given angular frequency value to obtain a given angular frequency difference, and initially assign an integral result of a PI controller of the PLL based on the given angular frequency difference.

The integral result (that is, the output of the PI controller) $\omega n$ of the PI controller of the PLL is initially assigned based on the given angular frequency difference, so that the output angular frequency value $\omega n$ of the PI controller is not to start from zero, but has a certain initial value, and the sum of the initial value and the real-time angular frequency value of the power grid is basically consistent with the oscillation angular frequency, that is, $\omega n + \omega' = \omega 1$. In this case, the output angular frequency value $\omega n$ of the PI controller may ensure that the oscillation frequency of the voltage-controlled oscillator 13 is maintained at the oscillation angular frequency value $\omega 1$ when the output phase $\theta$ tracks the real-time phase. In this way, the tracking time of the PI controller after the grid connection can be reduced, the tracking speed can be increased, and the power device can be controlled to connect to the power grid.

Step S160: Control the PI controller to start operating, and configure the oscillation angular frequency of the voltage-controlled oscillator based on an output angular frequency value of the PI controller and a preset angular frequency value of the power grid.

Specifically, switching to the PLL is performed for further tracking the real-time phase. In this case, the PI controller in the PLL is controlled to start operating, and the oscillation angular frequency $\omega n + \omega'$ of the voltage-controlled oscillator 13 is configured based on the output angular frequency value $\omega n$ of the PI controller and the preset angular frequency value of the power grid (that is, the given angular frequency value $\omega'$ is fixed as the preset angular frequency value of the power grid in this case). The system controls the voltage-controlled oscillator 13 to operate based on the configured oscillation angular frequency $\omega n + \omega'$, and continuously fine-tune the output phase $\theta$ of the power device, so that the output phase $\theta$ is finally consistent with the real-time phase. The preset angular frequency value $\omega'$ of the power grid may be a fixed value, for example, $50*2\pi = 100\pi$, or may be a real-time alternating current angular frequency.

Step S170: Control the power device to connect to the power grid.

Since the output phase $\theta$ of the off-grid power device has been corrected to the real-time phase before being connected to the power grid, or the deviation between the two phases is within the allowable range, and the output angular frequency $\omega n$ of the PI controller has been initially assigned, switching to the grid-connected operation can be implemented smoothly in this case. In this way, a PLL is used to smoothly switch from off-grid operation to grid-connected operation, thereby saving computing resources of the chip.

Refer to FIG. 1, FIG. 2, and FIG. 4. In one embodiment, the adjusting the oscillation angular frequency when a deviation exists between the output phase $\theta$ and the real-time phase of the real-time power grid voltage includes the following steps.

Step S131: Transform the real-time power grid voltage through the output phase, to obtain a d-axis voltage component and a q-axis voltage component in a rotating reference frame.

Specifically, the Clark transformer 111 in the PLL is utilized to first transform the three phase voltages u, v, and w to the stationary reference frame based on the output phase $\theta$, and then the Park transformer 112 is utilized to transform the voltages to the rotating reference frame, thereby obtaining the d-axis voltage component Vd and the q-axis voltage component Vq in the rotating reference frame.

Step S132: Adjust the oscillation angular frequency of the voltage-controlled oscillator based on a preset angular frequency adjustment value when a difference between the d-axis voltage component and a power grid voltage amplitude is greater than a first preset voltage value or an absolute value of the q-axis voltage component is greater than a second preset voltage value, and perform the step of controlling the voltage-controlled oscillator to operate based on the oscillation angular frequency, to obtain the output phase of the power device, that is, step S120.

On the one hand, when a deviation exists between the output phase $\theta$ and the real-time phase, a difference exists between the d-axis voltage component Vd transformed by the phase detector 11 and the power grid voltage amplitude, and it may be determined based on a magnitude of the difference whether the tracking is completed. A power grid voltage amplitude is usually known. For example, a 220V power grid amplitude is $\sqrt{2}*220$ is approximately 311V. On the other hand, when the q-axis voltage component Vq is greater than zero, it indicates that an output phase $\theta$ leads. Similarly, when the q-axis voltage component Vq is less than zero, it indicates that the output phase $\theta$ lags. In this way, it may be determined based on a magnitude of an absolute value of the q-axis voltage component Vq whether the tracking is completed.

Therefore, if the difference between the d-axis voltage component Vd and the power grid voltage amplitude is greater than the first preset voltage value, the oscillation angular frequency $\omega n + \omega'$ of the voltage-controlled oscillator 13 is adjusted based on the preset angular frequency adjustment value. Step S120 of controlling the voltage-controlled oscillator 13 to operate based on the oscillation angular frequency $\omega n + \omega'$ is performed, to obtain an output phase $\theta$ of a new power device. Such a cycle is repeated until the difference between the d-axis voltage component Vd and the power grid voltage amplitude is less than or equal to the first preset voltage value. Alternatively, when the absolute value of the q-axis voltage component Vq is greater than the second preset voltage value, the oscillation angular frequency $\omega n + \omega'$ of the voltage-controlled oscillator 13 is adjusted based on the preset angular frequency adjustment value. Step S120 of controlling the voltage-controlled oscillator 13 to operate according to the oscillation angular frequency $\omega n + \omega'$ is performed, to obtain an output phase $\theta$ of the new power device. Such a cycle is repeated until an absolute value of the q-axis voltage component Vq is less than or equal to a second preset voltage value.

As long as one of the two manners of determining whether the deviation exists between the output phase $\theta$ and the real-time phase is satisfied, the oscillation angular frequency $\omega n + \omega'$ of the voltage-controlled oscillator 13 is adjusted based on the preset angular frequency adjustment value, to perform the step of controlling the voltage-controlled oscillator 13 to operate based on the oscillation angular frequency $\omega n + \omega'$, to obtain the output phase $\theta$ of the power device.

It may be understood that since the output of the PI controller $\omega n$ remains 0 before grid connection, in the adjusting the oscillation angular frequency $\omega n + \omega'$ of the voltage-controlled oscillator 13 based on the preset angular frequency adjustment value, only $\omega'$ needs to be adjusted.

The first preset voltage value may be set to 5V, 10V, 15V, or 20V. The second preset voltage value may be set to 5V, 10V, 15V, or 20V. The preset angular frequency adjustment value may be set based on the deviation between the output phase $\theta$ and the real-time phase of the real-time power grid voltage. For example, the preset angular frequency adjustment value is in direct proportion to the difference between the d-axis voltage component Vd and the power grid voltage amplitude, or the preset angular frequency adjustment value is in direct proportion to the absolute value of the q-axis voltage component Vq, thereby increasing the tracking speed.

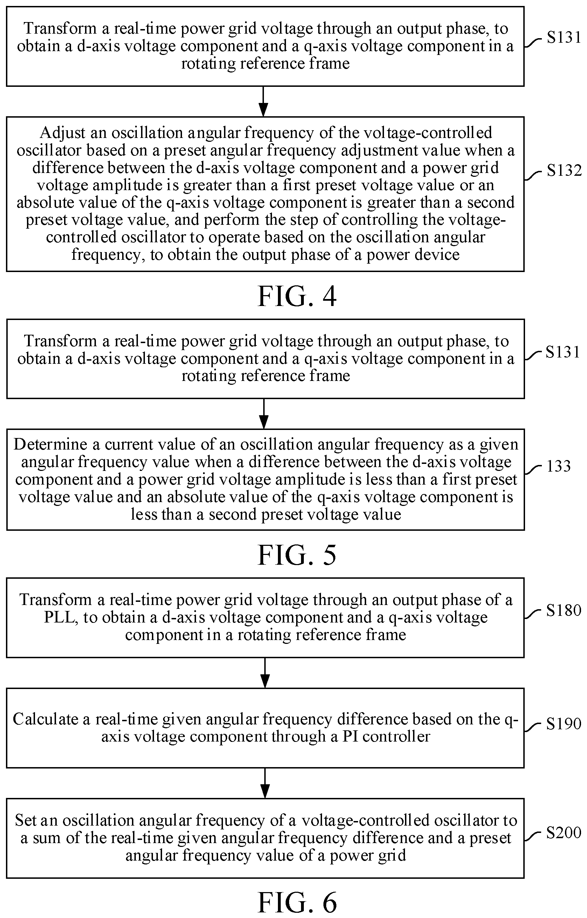

Refer to FIG. 4 and FIG. 5. In one embodiment, after step S131, the method further includes the following step.

Step S133: Determine a current value of the oscillation angular frequency as the given angular frequency value when the difference between the d-axis voltage component and the power grid voltage amplitude is less than a first preset voltage value and the absolute value of the q-axis voltage component is less than the second preset voltage value.

It may be understood that when the difference between the d-axis voltage component and the power grid voltage amplitude is less than the first preset voltage value and the absolute value of the q-axis voltage component is less than the second preset voltage value, it indicates that the deviation between the output phase $\theta$ and the real-time phase is within the allowable range of grid connection. In this case, since the output $\omega n$ of the PI controller is 0, the oscillation angular frequency $\omega n + \omega' = \omega'$, and the current value $\omega 1$ of the oscillation angular frequency is the current given angular frequency value.

In one embodiment, step S132 of adjusting the oscillation angular frequency of the voltage-controlled oscillator based on a preset angular frequency adjustment value includes the following steps.

Step I: Sum the real-time angular frequency value of the power grid and the preset angular frequency adjustment value to obtain a tracking angular frequency value.

The real-time angular frequency value $2\pi f\_grid$ of the power grid is for example $50*2\pi = 100\pi$. The preset angular frequency adjustment value may be $2\pi \Delta f$ and $2\pi \Delta f$ may be set based on the difference between the d-axis voltage component Vd calculated for the first time and the power grid voltage amplitude. For example, if a great difference exists between the d-axis voltage component Vd and the power grid voltage amplitude, the preset angular frequency adjustment value $2\pi \Delta f$ may be set to a relatively large value, for example, $\Delta f$ is 0.5 (Hz) or 1 (Hz); otherwise, the value is set to a relatively small value, for example, 0.1 (Hz). A positive or negative value of the preset angular frequency $2\pi \Delta f$ depends on whether the output phase $\theta$ leads or lags. When the q-axis voltage component Vq is greater than zero, it indicates that the output phase leads, and the tracking angular frequency value is $2\pi (f\_grid-\Delta f)$. When the q-axis voltage component Vq is less than zero, it indicates that the output phase lags. The tracking angular frequency value is $2\pi (f\_grid+\Delta f)$. It may be understood that in this embodiment, the preset angular frequency adjustment value may be a fixed value. In this case, the tracking angular frequency value is also a fixed value.

Step II: Configure the oscillation angular frequency as the tracking angular frequency value.

In other words, in step S132, every time the step of controlling the voltage-controlled oscillator 13 to operate based on the oscillation angular frequency $\omega n + \omega'$ to obtain the output phase $\theta$ of the power device is performed, the operation of the voltage-controlled oscillator 13 is controlled based on the oscillation angular frequency $\omega n + \omega'$ of a fixed

value. Exemplarily, it is assumed that the output phase $\theta$ lags behind the real-time phase of the power grid voltage, and the tracking angular frequency value is $2\pi$ (f_grid+$\Delta f$). Therefore, in the entire tracking process, the oscillation angular frequency may be maintained as the tracking angular frequency value, that is, maintained as $\omega n + \omega' = 2\pi$ (f_grid + $\Delta f$).

In one embodiment, step S132 of adjusting the oscillation angular frequency of the voltage-controlled oscillator based on a preset angular frequency adjustment value includes the following steps.

Step A: Sum the current value of the oscillation angular frequency and the preset angular frequency adjustment value to obtain a tracking angular frequency value.

The current value of the oscillation angular frequency $\omega n + \omega'$ is a real-time value. The preset angular frequency adjustment value may be set as required. For example, if a great difference exists between the d-axis voltage component Vd and the power grid voltage amplitude, the preset angular frequency adjustment value $2\pi\Delta f$ may be set to a relatively large value, for example, $\Delta f$ is 0.5 (Hz) or 1 (Hz); otherwise, the value is set to a relatively small value, for example, 0.1 (Hz). A positive or negative value of the preset angular frequency adjustment value $2\pi\Delta f$ depends on whether the output phase $\theta$ leads or lags. When the q-axis voltage component Vq is greater than zero, the tracking angular frequency value is $2\pi$ (f_grid-n$\Delta f$). When the q-axis voltage component Vq is less than zero, the tracking angular frequency value is $2\pi$ (f_grid+n$\Delta f$), where n is a number of times the step of controlling the voltage-controlled oscillator 13 to operate based on the oscillation angular frequency $\omega n + \omega'$ to obtain the output phase $\theta$ of the power device. It may be understood that in this embodiment, the preset angular frequency adjustment value may be a changing value. In this case, the tracking angular frequency value is a numerical value having a certain rate of change.

Step B: Configure the oscillation angular frequency as the tracking angular frequency value.

In other words, in step S132, every time the step of controlling the voltage-controlled oscillator 13 to operate based on the oscillation angular frequency $\omega n + \omega'$ to obtain the output phase $\theta$ of the power device is performed, the value of the oscillation angular frequency $\omega n + \omega'$ has a certain rate of change. Exemplarily, it is assumed that an output phase $\theta$ lags behind the real-time phase of the power grid voltage, and a tracking angular frequency value is $2\pi$ (f_grid+n$\Delta f$). Therefore, in the entire tracking process, when the grid power is powered on, the oscillation angular frequency of the oscillator is first configured as $2\pi f\_grid$. When it is confirmed for the first time that the deviation exists between the output phase $\theta$ and the real-time phase, the oscillation angular frequency is configured as a tracking angular frequency value, that is, $\omega n + \omega' = 2\pi$ ($f_{grid}$ + $\Delta f$θ next control period is obtained. If a deviation still exists between the output phase $\theta$ and the real-time phase, the oscillation angular frequency is configured as $\omega n + \omega' = 2\pi$ ($f_{grid}$ + $2 \times \Delta f$), and so on.

In one embodiment, in step 150, the performing calculation based on the real-time angular frequency value of the power grid and the given angular frequency value to obtain the given angular frequency difference includes: subtracting the real-time angular frequency value of the power grid from the given angular frequency value, to obtain the given angular frequency difference.

Since the voltage-controlled oscillator 13 is always controlled to self-oscillate during the off-grid operation of the power device, and the PI controller of the PLL has not started to operate, a voltage output distortion may occur if grid connection is directly performed in this case. Through the given angular frequency value $\omega'$, the given angular frequency difference $\omega n$ is calculated in turn, and the integral result of the PI controller in the PLL is assigned, so that the next PLL can track the power grid smoothly and quickly, and the self-oscillation phase is given by the power grid phase.

The preset angular frequency adjustment value is used as a fixed value of $2\pi\Delta f$, and the preset angular frequency of the power grid is used as the real-time angular frequency of the power grid of $2\pi f\_grid$ by way of examples. It may be seen from the foregoing description that when the output phase $\theta$ tracks the real-time phase of the power grid voltage, the current value of the oscillation angular frequency is $\omega n + \omega' = \omega 1 = 2\pi(f_{grid} \pm \Delta f)$, and the given angular frequency difference $\Delta\omega' = \omega 1 - \omega 0 = 2\pi(f_{grid} + \Delta f$- $\pi f_{grid} = 2\pi\Delta f$.

In this case, a switch to the PI controller is performed for operation. In this case, the oscillation angular frequency is $\omega n + \omega' = pi_{out} + \omega'$, $\omega'$ is fixed as the preset power grid angular frequency. Therefore, $\omega' = 2\pi f_{grid}$, smooth switching, the oscillation angular frequency remains unchanged. Therefore, $\omega n + \omega' = pi_{out} + \omega'$

$$pi_{out} = \omega 1 - \omega' = 2\pi\left(f_{grid} \pm \Delta f\right) - 2\pi f_{grid} = \pm 2\pi\Delta f = \Delta\omega'$$

The output of the PI controller is kp * error + ki_out, where kp * error is a result of proportion calculation, and ki_out is a result of integral calculation. For the PI controller, after the parameter configuration is completed, a proportional adjustment step kp*error is known. Then according to $\Delta\omega'$, the integral result ki_out may be calculated in turn. After initial assignment of the integral result ki_out, the integral calculation result of the subsequent PI controller continues to accumulate on this basis, and switching to the PLL is performed to continue tracking the real-time phase.

In one embodiment, before step S132 of adjusting the oscillation angular frequency of the voltage-controlled oscillator based on a preset angular frequency adjustment value, the method further includes:

configuring the preset angular frequency adjustment value based on the q-axis voltage component; and

configuring the preset angular frequency adjustment value to a negative value in a case that the q-axis voltage component is a positive value, and configuring the preset angular frequency adjustment value to a positive value in a case that the q-axis voltage component is a negative value. The absolute value of the preset angular frequency adjustment value is in a positive correlation with the absolute value of the q-axis voltage component.

It may be understood that when the q-axis voltage component Vq is greater than zero, the output phase $\theta$ leads the real-time phase, and then a tracking speed less than the real-time angular frequency value $2\pi f\_grid$ of the power grid is needed. Therefore, the preset angular frequency adjustment value $2\pi\Delta f$ is configured as a negative value, so that the output phase $\theta$ tracks the real-time phase. When the q-axis voltage component Vq is less than zero, the output phase $\theta$ lags behind the real-time phase, and then a tracking speed greater than the real-time angular frequency value $2\pi f\_grid$ of the power grid is needed. Therefore, the preset angular frequency adjustment value $2\pi\Delta f$ is configured as a positive value, so that the output phase $\theta$ tracks the real-time phase. A larger absolute value of the preset angular frequency adjustment value $2\pi\Delta f$ and a larger absolute value of the q-axis voltage component Vq indicate greater severity of leading or lagging of the output phase $\theta$. Therefore, a larger value of a corresponding preset angular frequency adjustment value $2\pi\Delta f$ is configured. On the contrary, a smaller value of the corresponding preset angular frequency adjustment value $2\pi\Delta f$ is configured. Therefore, the absolute value of the preset angular frequency adjustment value and the absolute value of the q-axis voltage component have a positive correlation.

Refer to FIG. 1, FIG. 2, FIG. 6, and FIG. 7. In one embodiment, after step S170 of controlling the power device to connect to the power grid, the method further includes the following steps.

Step S180: Transform the real-time power grid voltage through the output phase of the PLL, to obtain a d-axis voltage component and a q-axis voltage component in a rotating reference frame.

Specifically, the Clark transformer 111 in the PLL is utilized to first transform the three phase voltages u, v, and w to the stationary reference frame based on the output phase $\theta$, and then the Park transformer 112 is utilized to transform the voltages to the rotating reference frame, thereby obtaining the d-axis voltage component Vd and the q-axis voltage component Vq in the rotating reference frame. In this way, the PI controller may be configured to calculate a deviation between the d-axis voltage component Vd and the power grid voltage amplitude, and determine, based on the q-axis voltage component Vq, whether the output phase $\theta$ leads or lags.

Step S190: Calculate a real-time given angular frequency difference based on the q-axis voltage component through the PI controller.

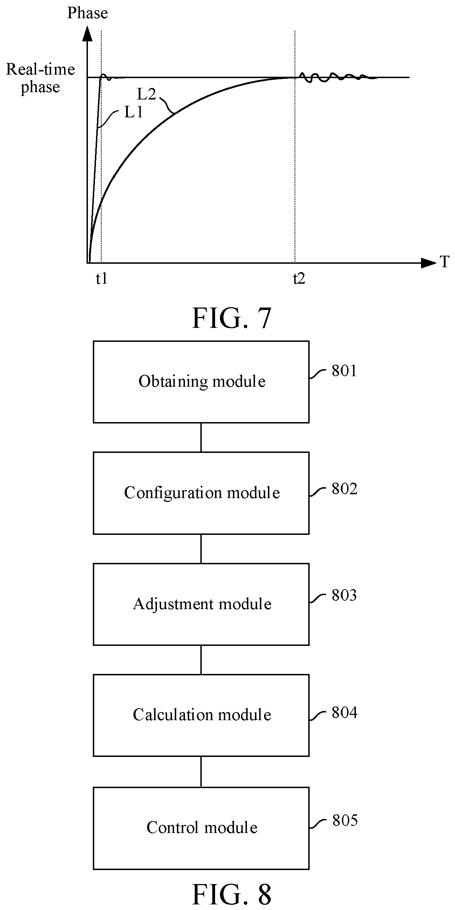

After the power device is connected to the power grid (a moment t1 shown in FIG. 7), a switch to the PLL is performed to continue tracking the real-time phase of the power grid, and subsequently a real-time given angular frequency difference (that is, $\omega n$) is no longer directly assigned, but is calculated by the PI controller based on the q-axis voltage component Vq, Vq_ref (which is usually configured as 0), and the like.

Step S200: Set the oscillation angular frequency of the voltage-controlled oscillator to a sum of the real-time given angular frequency difference and the preset angular frequency value of the power grid.

The real-time given angular frequency difference $\omega n$ is a real-time output value of the PI controller. The voltage-controlled oscillator 13 is controlled to operate based on the oscillation angular frequency $\omega n + \omega'$, to obtain the output phase $\theta$ of the power device. In this case, the preset angular frequency value of the power grid $\omega'$ may be a fixed value, for example, $50*2\pi$, or may be a real-time alternating current angular frequency.

As shown in FIG. 7, a curve L1 is a phase change curve diagram corresponding to the method for controlling switching of a power device from off-grid operation to grid-connected operation according to an embodiment of this application. After the power grid is powered on (0 moment), and after the PI controller is assigned an initial integral value according to the method of the embodiment of this application, t1 is switched to a PLL to start operating, so that an actual phase of the power grid can be locked immediately. A curve L2 is a phase change curve corresponding to the switching from off-grid operation to grid-connected operation in the related art. An initial value of the PI controller does not lock a power grid phase from zero until a moment t2. Through comparison between the two, the method for controlling switching of a power device from off-grid operation to grid-connected operation according to an embodiment of this application requires a much shorter time to control the switching from off-grid operation to grid-connected operation.

In one embodiment, before the power grid is powered on, the method for controlling switching of a power device from off-grid operation to grid-connected operation further includes: setting, in the off-grid operation mode, the oscillation angular frequency of the voltage-controlled oscillator of the PLL to the preset angular frequency value of the power grid.

Generally, the preset angular frequency value of the power grid is set to a conventional angular frequency value of the power grid, so that the power device can quickly track a power grid phase during the switching from off-grid operation to grid-connected operation. The angular frequency value of the power grid may be an angular frequency value of the power grid pre-configured according to a local power grid, or may be a real-time angular frequency of the power grid detected in real-time. This is not limited in this application.

Refer to FIG. 8. An embodiment of this application further provides a control apparatus for grid-connected operation of a power device. Referring to FIG. 1, the power device includes a PLL, and the control apparatus includes:

an obtaining module 801, configured to obtain, when a power grid is powered on, a real-time angular frequency value of the power grid and a real-time power grid voltage;

a configuration module 802, configured to set, in an off-grid operation mode, an oscillation angular frequency of a voltage-controlled oscillator 13 of the PLL to the real-time angular frequency value of the power grid, and controlling, based on the oscillation angular frequency, the voltage-controlled oscillator 13 to operate, to obtain an output phase of the power device;

an adjustment module 803, configured to adjust the oscillation angular frequency when a deviation exists between the output phase and the real-time phase of the real-time power grid voltage, so that the output phase tracks the real-time phase;

the obtaining module 801 is further configured to obtain a given angular frequency value of the oscillation angular frequency when the output phase tracks the real-time phase;

a calculation module 804, configured to perform calculation based on the real-time angular frequency value of the power grid and the given angular frequency value to obtain a given angular frequency difference, and initially assign an integral result of a PI controller of the PLL based on the given angular frequency difference;

the configuration module 802 is further configured to control the PI controller to start operating, and configure the oscillation angular frequency of the voltage-controlled oscillator based on an output angular frequency value of the PI controller and a preset angular frequency value of the power grid; and

a control module 805, configured to control the power device to connect to the power grid.

In one embodiment, the adjustment module 803 includes:

a transformation obtaining unit, configured to transform the real-time power grid voltage through the output phase, to obtain a d-axis voltage component and a q-axis voltage component in a rotating reference frame; and

an adjustment execution unit, configured to adjust the oscillation angular frequency of the voltage-controlled oscillator based on a preset angular frequency adjustment value when a difference between the d-axis voltage component and a power grid voltage amplitude is greater than a first preset voltage value or an absolute value of the q-axis voltage component is greater than a second preset voltage value, and perform the step of controlling the voltage-controlled oscillator to operate based on the oscillation angular frequency, to obtain the output phase of the power device.

In one embodiment, the adjustment module 803 further includes:
a determining unit, configured to determine a current value of the oscillation angular frequency as the given angular frequency value when the difference between the d-axis voltage component and the power grid voltage amplitude is less than a first preset voltage value and the absolute value of the q-axis voltage component is less than the second preset voltage value.

In one embodiment, the adjustment execution unit includes:

a summation subunit, configured to sum the real-time angular frequency value of the power grid and the preset angular frequency adjustment value to obtain a tracking angular frequency value; and

a configuration subunit, configured to configure the oscillation angular frequency as the tracking angular frequency value.

In one embodiment:

the summation subunit is further configured to sum the current value of the oscillation angular frequency and the preset angular frequency adjustment value to obtain a tracking angular frequency value; and

the configuration subunit is further configured to configure the oscillation angular frequency as the tracking angular frequency value.

In one embodiment, the calculation module 804 is configured to subtract the real-time angular frequency value of the power grid from the given angular frequency value, to obtain the given angular frequency difference.

In one embodiment, the configuration subunit is further configured to: configure the preset angular frequency adjustment value based on the q-axis voltage component; and configure the preset angular frequency adjustment value to a negative value in a case that the q-axis voltage component is a positive value, and configure the preset angular frequency adjustment value to a positive value in a case that the q-axis voltage component is a negative value. An absolute value of the preset angular frequency adjustment value is in a positive correlation with the absolute value of the q-axis voltage component.

In one embodiment, after the power device is controlled to connect to the power grid,

a phase detector 11 of the PLL transforms the real-time power grid voltage through an output phase of the PLL, to obtain a d-axis voltage component and a q-axis voltage component in a rotating reference frame;

the PLL calculates a real-time given angular frequency difference based on the q-axis voltage component through the PI controller; and

a loop filter 12 of the PLL sets the oscillation angular frequency of the voltage-controlled oscillator 13 to a sum of the real-time given angular frequency difference and the preset angular frequency value of the power grid.

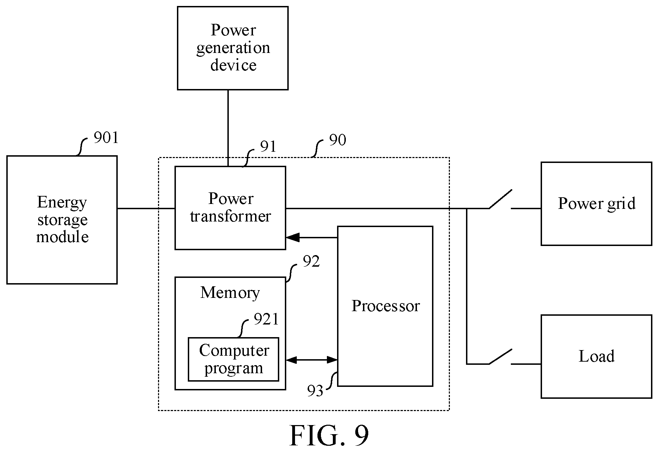

Referring to FIG. 9, an embodiment of this application further provides a power device 90. The power device 90 includes a PLL, a memory 92, a processor 93, and a computer program 921 stored in the memory 92 and executable on the processor 93. The PLL is connected to the processor 93, and the processor 93 implements the steps of the foregoing control method for switching a power device from off-grid connection to on-grid connection when executing the computer program 921.

Optionally, the power device further includes a power converter 91. A first end of the power converter 91 is configured to connect to an energy storage module 901. A second end of the power converter 91 is configured to connect to a grid and/or a load. A third end of the power converter 91 is configured to connect to a power generation device.

It may be understood that the power device 90 is, for example, an independent apparatus configured to connect to the energy storage module 901 and draw power from or charge the energy storage module.

Certainly, the power device 90 may also be integrated into the energy storage module 901. Therefore, an embodiment of this application further provides an energy storage apparatus, including a PLL, an energy storage module 901, a power converter 91, a memory 92, a processor 93, and a computer program 921 stored in the memory 92 and executable on the processor 93. The power converter 91 is connected to the energy storage module 901 and the processor 93. The processor 93 implements the steps of the foregoing method for controlling switching of a power device from off-grid operation to grid-connected operation when executing the computer program 921.

It may be understood that, batteries (that is, energy storage modules) 901 and power devices 90 in the energy storage apparatus are in one-to-one correspondence in quantity, and one or more batteries or power devices may be arranged. This is not limited in this application.

A person skilled in the art may understand that FIG. 9 is merely an example of the power device 90 and the energy storage apparatus, and does not constitute a limitation on the power device 90 and the energy storage apparatus, and may include more or fewer components than those shown in the figure, or some merged components, or different components. For example, the power device may further include an input/output device or a network access device.

The processor 93 may be a central processing unit (CPU), and the processor 93 may further be another general-purpose controller, a digital signal processor (DSP), an application specific integrated circuit (ASIC), a field-programmable gate array (FPGA), or another programmable logic device, a discrete gate or a transistor logic device, a discrete hardware component, or the like. The general-purpose controller may be a microcontroller or may be any conventional controller.

In some embodiments, the memory 92 may be an internal storage unit of the power device 90 or the energy storage module, for example, a hard disk or a memory of the power device 90 or the energy storage module. In some other embodiments, the memory 92 may also be an external storage device of the power device 90 or the energy storage module, for example, a plug-in hard disk, a smart media card (SMC), a secure digital (SD) card, or a flash card that is equipped on the power device 90 or the energy storage module. Further, the memory 92 may further include both the internal storage unit of the power device 90 or the energy storage module and the external storage device. The memory 92 is configured to store an operating system, an application program, a boot loader, data, another program, and the like. The memory 92 may further be configured to temporarily store data that has been outputted or is to be outputted.

An embodiment of this application further provides a computer-readable storage medium. The computer-readable storage medium stores a computer program 921. The computer program 921, when executed by a processor 93, may implement the steps in the foregoing method embodiments.

An embodiment of this application provides a computer program product. The computer program product, when run on a computer, causes the computer to perform the steps in the foregoing method embodiments.

When the integrated unit is implemented in the form of a software functional unit and sold or used as an independent product, the integrated unit may be stored in a computer-readable storage medium. Based on this understanding, all or some of the processes in the foregoing method embodiments may be implemented by a computer program 921 instructing relevant hardware in this application. The computer program 921 may be stored in a computer-readable storage medium. When the computer program 921 is executed by a processor 93, the steps of the foregoing method embodiments may be implemented. The computer program 921 includes code of the computer program 921. The code of the computer program 921 may be in the form of source code, object code, and an executable file, some intermediate forms, or the like. The computer-readable medium may include at least: any entity or apparatus, a record medium, a computer memory 92, a read-only memory 92 (ROM), a random access memory 92 (RAM), a compact disc ROM (CD-ROM), a magnetic tape, a floppy disk, an optical data storage device, or the like that can carry the code of the computer program 921 to a photographing apparatus/terminal device. The computer-readable storage medium mentioned in this application may be a non-volatile storage medium, in other words, a non-transitory storage medium.

It should be understood that all or some of the steps implementing the foregoing embodiments may be implemented through software, hardware, firmware, or any combination thereof. During implementation through software, all or some of embodiments may be implemented in a form of a product of the computer program 921. The product of the computer program 921 includes one or more computer instructions. The computer instruction may be stored in the foregoing computer-readable storage medium.

In the foregoing embodiments, the descriptions of various embodiments have respective focuses. For a part that is not described in detail or recorded in an embodiment, reference may be made to related descriptions in other embodiments.

The above embodiments are merely intended to describe the technical solutions of this application, and are not intended to limit this application. Although the present disclosure is described in detail with reference to the above embodiments, a person of ordinary skill in the art should understand that modifications may still be made to the technical solutions described in the above embodiments, or equivalent substitutions may be made to some of the technical features. However, these modifications or substitutions do not make the essence of the corresponding technical solution depart from the spirit and scope of the technical solutions of the embodiments of this application, and all fall within the protection scope of this application.

**Claims**

1. A control method for grid-connected operation of a power device, wherein the power device comprises a phase-locked loop (PLL), and the control method comprises:

   obtaining, when a power grid is powered on, a real-time angular frequency value of the power grid and a real-time power grid voltage;
   setting, in an off-grid operation mode, an oscillation angular frequency of a voltage-controlled oscillator of the PLL to the real-time angular frequency value of the power grid, and controlling, based on the oscillation angular frequency, the voltage-controlled oscillator to operate, to obtain an output phase of the power device;
   adjusting the oscillation angular frequency when a deviation exists between the output phase and the real-time phase of the real-time power grid voltage, so that the output phase tracks the real-time phase;
   obtaining a given angular frequency value of the oscillation angular frequency when the output phase tracks the real-time phase;
   performing calculation based on the real-time angular frequency value of the power grid and the given angular frequency value to obtain a given angular frequency difference, and initially assigning an integral result of a PI controller of the PLL based on the given angular frequency difference;
   controlling the PI controller to start operating, and configuring the oscillation angular frequency of the voltage-controlled oscillator based on an output angular frequency value of the PI controller and a preset angular frequency value of the power grid; and
   controlling the power device to connect to the power grid.

2. The control method according to claim 1, wherein the adjusting the oscillation angular frequency when a deviation exists between the output phase and the real-time phase of the real-time power grid voltage comprises:

   transforming the real-time power grid voltage through the output phase, to obtain a d-axis voltage component and a q-axis voltage component in a rotating reference frame; and
   adjusting the oscillation angular frequency of the voltage-controlled oscillator based on a preset angular frequency adjustment value when a difference between the d-axis voltage component and a power grid voltage amplitude is greater than a first preset voltage value or an absolute value of the q-axis voltage component is greater than a second preset voltage value.

3. The control method according to claim 2, wherein after the transforming the real-time power grid voltage through the output phase, to obtain a d-axis voltage component and a q-axis voltage component in a rotating reference frame, the method further comprises:
   determining a current value of the oscillation angular frequency as the given angular frequency value when the difference between the d-axis voltage component and the power grid voltage amplitude is less than a first preset voltage value and the absolute value of the q-axis voltage component is less than the second preset voltage value.

4. The control method according to claim 2, wherein the adjusting the oscillation angular frequency of the voltage-controlled oscillator based on a preset angular frequency adjustment value comprises:

> summing the real-time angular frequency value of the power grid and the preset angular frequency adjustment value to obtain a tracking angular frequency value; and
> configuring the oscillation angular frequency as the tracking angular frequency value.

5. The control method according to claim 2, wherein the adjusting the oscillation angular frequency of the voltage-controlled oscillator based on a preset angular frequency adjustment value comprises:

> summing the current value of the oscillation angular frequency and the preset angular frequency adjustment value to obtain a tracking angular frequency value; and
> configuring the oscillation angular frequency as the tracking angular frequency value.

6. The control method according to claim 2, wherein the performing calculation based on the real-time angular frequency value of the power grid and the given angular frequency value to obtain a given angular frequency difference comprises:
subtracting the real-time angular frequency value of the power grid from the given angular frequency value, to obtain the given angular frequency difference.

7. The control method according to claim 2, wherein before the adjusting the oscillation angular frequency of the voltage-controlled oscillator based on a preset angular frequency adjustment value, the method further comprises:

> configuring the preset angular frequency adjustment value based on the q-axis voltage component; and
> configuring the preset angular frequency adjustment value to a negative value in a case that the q-axis voltage component is a positive value, and configuring the preset angular frequency adjustment value to a positive value in a case that the q-axis voltage component is a negative value, wherein an absolute value of the preset angular frequency adjustment value is positively correlated with the absolute value of the q-axis voltage component.

8. The control method according to any one of claims 1 to 7, wherein after the controlling the power device to connect to the power grid, the method further comprises:

> transforming the real-time power grid voltage through an output phase of the PLL, to obtain a d-axis voltage component and a q-axis voltage component in a rotating reference frame;
> calculating a real-time given angular frequency difference based on the q-axis voltage component through the PI controller; and
> setting the oscillation angular frequency of the voltage-controlled oscillator to a sum of the real-time given angular frequency difference and the preset angular frequency value of the power grid.

9. The control method according to any one of claims 1 to 7, wherein before the grid power is powered on, the method further comprises:
setting, in the off-grid operation mode, the oscillation angular frequency of the voltage-controlled oscillator of the PLL to the preset angular frequency value of the power grid.

10. A power device, comprising a PLL, a memory, a processor, and a computer program stored in the memory and executable on the processor, wherein the PLL is connected to the processor, and the processor implements the steps of the method for controlling switching of a power device from off-grid operation to grid-connected operation according to any one of claims 1 to 9 when executing the computer program.

FIG. 1

FIG. 2

| Obtain, when a power grid is powered on, a real-time angular frequency value of the power grid and a real-time power grid voltage | S110 |

↓

| Set, in an off-grid operating mode, an oscillation angular frequency of a voltage-controlled oscillator of a PLL to the real-time angular frequency value of the power grid, and control, based on the oscillation angular frequency, the voltage-controlled oscillator to operate, to obtain an output phase of a power device | S120 |

↓

| Adjust the oscillation angular frequency when a deviation exists between the output phase and the real-time phase of the real-time power grid voltage, so that the output phase tracks the real-time phase | S130 |

↓

| Obtain a given angular frequency value of the oscillation angular frequency when the output phase tracks the real-time phase | S140 |

↓

| Perform calculation based on the real-time angular frequency value of the power grid and the given angular frequency value to obtain a given angular frequency difference, and initially assign an integral result of a PI controller of the PLL based on the given angular frequency difference | S150 |

↓

| Control the PI controller to start operating, and configure the oscillation angular frequency of the voltage-controlled oscillator based on an output angular frequency value of the PI controller and a preset angular frequency value of the power grid | S160 |

↓

| Control the power device to connect to the power grid | S170 |

## FIG. 3

| Transform a real-time power grid voltage through an output phase, to obtain a d-axis voltage component and a q-axis voltage component in a rotating reference frame | S131 |

| Adjust an oscillation angular frequency of the voltage-controlled oscillator based on a preset angular frequency adjustment value when a difference between the d-axis voltage component and a power grid voltage amplitude is greater than a first preset voltage value or an absolute value of the q-axis voltage component is greater than a second preset voltage value, and perform the step of controlling the voltage-controlled oscillator to operate based on the oscillation angular frequency, to obtain the output phase of a power device | S132 |

## FIG. 4

| Transform a real-time power grid voltage through an output phase, to obtain a d-axis voltage component and a q-axis voltage component in a rotating reference frame | S131 |

| Determine a current value of an oscillation angular frequency as a given angular frequency value when a difference between the d-axis voltage component and a power grid voltage amplitude is less than a first preset voltage value and an absolute value of the q-axis voltage component is less than a second preset voltage value | 133 |

## FIG. 5

| Transform a real-time power grid voltage through an output phase of a PLL, to obtain a d-axis voltage component and a q-axis voltage component in a rotating reference frame | S180 |

| Calculate a real-time given angular frequency difference based on the q-axis voltage component through a PI controller | S190 |

| Set an oscillation angular frequency of a voltage-controlled oscillator to a sum of the real-time given angular frequency difference and a preset angular frequency value of a power grid | S200 |

## FIG. 6

FIG. 7

FIG. 8

FIG. 9

## INTERNATIONAL SEARCH REPORT

| International application No. |
| --- |
| **PCT/CN2024/118651** |

| A. CLASSIFICATION OF SUBJECT MATTER |
| --- |
| H02J3/38(2006.01)i;  H02J3/44(2006.01)i;  H02J3/28(2006.01)i |
| According to International Patent Classification (IPC) or to both national classification and IPC |

| B. FIELDS SEARCHED |
| --- |
| Minimum documentation searched (classification system followed by classification symbols) |
| IPC:  H02J |
| Documentation searched other than minimum documentation to the extent that such documents are included in the fields searched |
| Electronic data base consulted during the international search (name of data base and, where practicable, search terms used) |
| CNABS, CNTXT, EPTXT, USTXT, VEN, WOTXT, CNKI, IEEE: d轴, q轴, 比例, 并网, 电压, 分量, 积分, 角频率, 离并网, 离网, 锁相环, droop, interconnection, component, angular frequency, off grid, inverter, loop, parallel, phase, PI, PLL, SPLL, lock+ |

| C. DOCUMENTS CONSIDERED TO BE RELEVANT | | |
| --- | --- | --- |
| Category* | Citation of document, with indication, where appropriate, of the relevant passages | Relevant to claim No. |
| PX | CN 117277406 A (ECOFLOW INC.) 22 December 2023 (2023-12-22)<br>claims 1-10 | 1-10 |
| A | CN 102723741 A (NANJING UNIVERSITY OF AERONAUTICS AND ASTRONAUTICS)<br>10 October 2012 (2012-10-10)<br>description, paragraphs 6-34, and figures 1-6 | 1-10 |
| A | CN 111525922 A (CHINA UNIVERSITY OF PETROLEUM (EAST CHINA)) 11 August<br>2020 (2020-08-11)<br>entire document | 1-10 |
| A | CN 115603360 A (NORTH CHINA ELECTRIC POWER UNIVERSITY et al.) 13 January<br>2023 (2023-01-13)<br>entire document | 1-10 |
| A | US 2019229657 A1 (CHONGQING HEYA TECHNOLOGY CO., LTD.) 25 July 2019<br>(2019-07-25)<br>entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 December 2024** | **23 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/118651**

| Patent document cited in search report | | | Publication date (day/month/year) | Patent family member(s) | | | Publication date (day/month/year) |
|---|---|---|---|---|---|---|---|
| CN | 117277406 | A | 22 December 2023 | None | | | |
| CN | 102723741 | A | 10 October 2012 | None | | | |
| CN | 111525922 | A | 11 August 2020 | None | | | |
| CN | 115603360 | A | 13 January 2023 | None | | | |
| US | 2019229657 | A1 | 25 July 2019 | CN | 110086390 | A | 02 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311181407